# EUROPEAN PATENT APPLICATION

(11) **EP 3 779 914 A1**
(43) Date of publication of application: **17.02.2021**
(21) Application number: 19774996.3
(22) Date of filing: 15.03.2019
(51) Int. Cl.: G08B 23/00, G08B 17/00, G08B 17/107

(54) **ACOUSTIC DEVICE, CONTROL METHOD AND PROGRAM**

(30) Priority: 29.03.2018 JP 2018066187
(71) Applicant: Panasonic Intellectual Property Management Co., Ltd., Osaka-shi, Osaka 540-6207 (JP)
(72) Inventor: SAKAMOTO, Koji, Osaka-shi, Osaka 540-6207 (JP); MUKOYAMA, Fumiyoshi, Osaka-shi, Osaka 540-6207 (JP)
(74) Representative: Appelt, Christian W.
(86) International application number: PCT/JP2019/010864
(87) International publication number: WO 2019/188419

(57) **Abstract**

An object of the present disclosure is to contribute to reducing an increase in power consumption while allowing a person to be evacuated in an even shorter time. An audio device (1) is to be installed in a structural component and includes a control unit (10), a first emission unit (11), and a second emission unit (12). The control unit (10) determines, in accordance with information provided about a particular event, whether or not the particular event is present. The first emission unit (11) emits, when the control unit (10) determines that the particular event be present, a sound to alert a person to the presence of the particular event. The second emission unit (12) emits, in accordance with the information, illuminating light that irradiates a surrounding region. The second emission unit (12) emits, as the illuminating light, at least one of first illuminating light that flickers or second illuminating light with brightness that changes stepwise.

## Description

### Technical Field

The present disclosure generally relates to an audio device, a control method, and a program, and more particularly relates to an audio device configured to alert the user to the presence of a particular event, and a method and program for controlling such an audio device.

### Background Art

Patent Literature 1 discloses a known residential fire alarm. The residential fire alarm includes a smoke detecting unit with a smoke inlet, which is provided at the center of its cover, and detects the outbreak of a fire when the concentration of smoke produced by a fire reaches a predetermined concentration. The residential fire alarm further has sound holes on a lower left-hand side of the smoke detecting unit on the cover. A loudspeaker is arranged behind the sound holes to emit an alarm sound and a voice warning message. The residential fire alarm may be installed on, for example, the wall surface of a resident's room or bedroom in a dwelling house to detect, in the event of the outbreak of a fire, the fire and start sounding a fire warning.

### Citation List

### Patent Literature

Patent Literature 1: JP 2010-49604 A

### Summary of Invention

There has been an increasing demand for residential fire alarms (typically in the form of audio devices) that could evacuate residents of a house in an even shorter time. One possible solution to realize this could be, for example, providing another type of alert capability besides the capability of sounding the alarm such that at the outbreak of a particular event, not only the alarm is sounded but also the additional alert capability is activated as well. In that case, however, the power consumption could increase compared to a situation where simply the alarm is sounded.

In view of the foregoing background, it is therefore an object of the present disclosure to provide an audio device, a control method, and a program, all of which are configured or designed to contribute to reducing an increase in power consumption while allowing a person to be evacuated in an even shorter time.

An audio device according to an aspect according to an aspect of the present disclosure is to be installed in a structural component. The audio device includes a control unit, a first emission unit, and a second emission unit. The control unit determines, in accordance with information provided about a particular event, whether or not the particular event is present. The first emission unit emits, when the control unit determines that the particular event be present, a sound to alert a person to the presence of the particular event. The second emission unit emits, in accordance with the information, illuminating light that irradiates a surrounding region. The second emission unit emits, as the illuminating light, at least one of first illuminating light that flickers or second illuminating light with brightness that changes stepwise.

A control method according to another aspect of the present disclosure is a method for controlling an audio device installed in a structural component. The control method includes a decision step, a first emission step, and a second emission step. The decision step includes determining, in accordance with information provided about a particular event, whether or not the particular event is present. The first emission step includes making, when a decision is made that the particular event be present, a first emission unit emit a sound to alert a person to the presence of the particular event. The second emission step includes making a second emission unit emit, in accordance with the information, illuminating light that irradiates a surrounding region. The second emission step includes making the second emission unit emit, as the illuminating light, at least one of first illuminating light that flickers or second illuminating light with brightness that changes stepwise.

A program according to still another aspect of the present disclosure is designed to cause a computer system to carry out the control method described above.

### Brief Description of Drawings

FIG. 1 illustrates the appearance of an audio device according to an exemplary embodiment;
FIG. 2 is a block diagram illustrating a configuration for the audio device;
FIG. 3 is a sequence chart illustrating how the audio device operates;
FIG. 4 illustrates how the audio device works when installed in a bedroom;
FIGS. 5A and 5B illustrate a second variation of the audio device; and
FIGS. 6A and 6B illustrate the appearance of a fifth variation of the audio device.

### Description of Embodiments

### (1) Overview

Note that the embodiment to be described below is only an exemplary one of various embodiments of the present disclosure and should not be construed as limiting. Rather, the exemplary embodiment to be described below may be readily modified in various manners depending on a design choice or any other factor without departing from the scope of the present disclosure. The drawings to be referred to in the following description of embodiments are all schematic representations. That is to say, the ratio of the dimensions (including thicknesses) of respective constituent elements illustrated on the drawings does not always reflect their actual dimensional ratio.

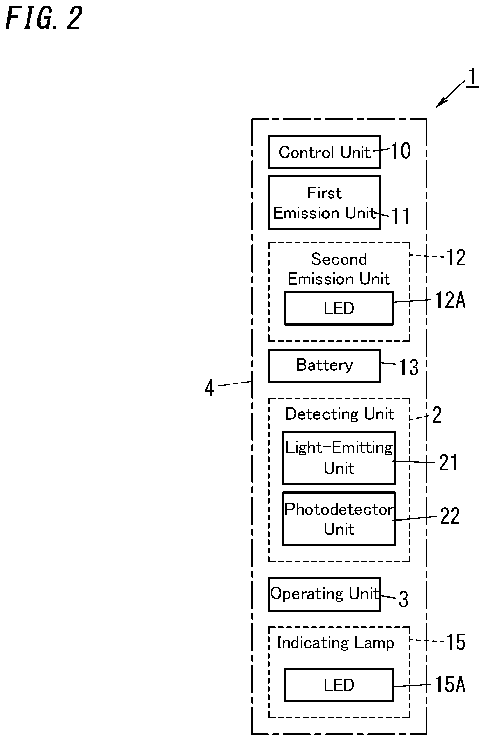

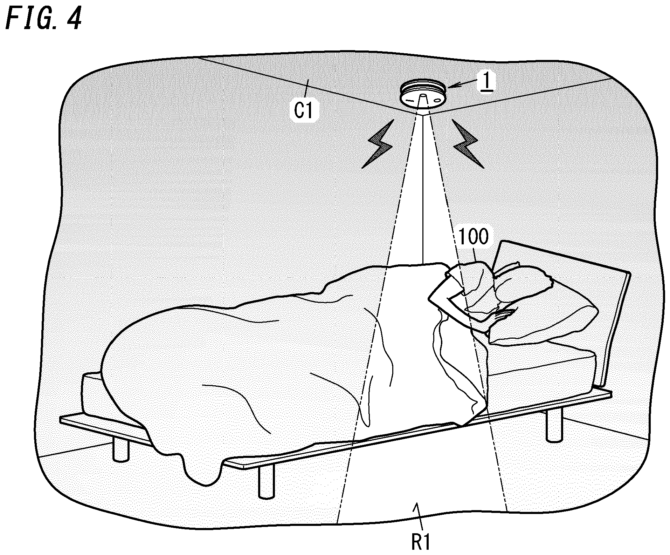

As shown in FIG. 4, an audio device 1 according to this embodiment is to be installed in a structural component C1 (i.e., a building component such as a ceiling or a wall). The audio device 1 includes a control unit 10, a first emission unit 11, and a second emission unit 12 as shown in FIG. 2. The control unit 10 determines, in accordance with information provided about a particular event, whether or not the particular event is present.

In this example, the "particular event" is supposed to be a fire, for example. Therefore, the audio device 1 may be implemented as, for example, a fire alarm that emits an alarm sound or any other type of sound at the outbreak of the fire. However, this is only an example of the present disclosure and should not be construed as limiting. Alternatively, the particular event does not have to be a fire but may also be gas leakage, a tsunami, an earthquake, or intrusion of a suspicious person as long as the event requires sounding an alarm.

As shown in FIG. 2, the audio device 1 according to this embodiment includes a photoelectric sensor (as a detecting unit 2) for detecting smoke as a built-in component thereof. However, this is only an example of the present disclosure and should not be construed as limiting. Alternatively, the detecting unit 2 may also be a fixed temperature sensor for detecting heat. Optionally, the detecting unit 2 may also be provided separately from the audio device 1. In that case, the control unit 10 of the audio device 1 may be provided with information about the fire by communicating with another audio device (fire alarm) including the detecting unit 2.

The audio device 1 may be installed on a surface (such as a ceiling surface or wall surface) of a structural component C1 such as a resident's room, a bedroom, stairs, or a hallway in a dwelling house. The dwelling house may be a single-family dwelling house or a multi-family dwelling house (i.e., what is called a "mansion" in Japan). Alternatively, the audio device 1 may also be installed (on the ceiling surface or wall surface) in a non-residential structural component C1, instead of the dwelling houses. Examples of such non-dwelling structural components include office buildings, theaters, movie theaters, public halls, amusement facilities, complex facilities, restaurants, department stores, schools, hotels, inns, hospitals, nursing homes for the elderly, kindergartens, libraries, museums, art museums, underground shopping malls, railway stations, and airports.

When the control unit 10 determines that a fire as the particular event should be present, the first emission unit 11 emits an alarm sound to alert the user to the presence of the fire. Meanwhile, the second emission unit 12 emits, in accordance with the information about the fire, light that irradiates a surrounding region R1 (see FIG. 4). In the following description, the light emitted from the second emission unit 12 will be hereinafter referred to as "illuminating light." Note that the light emitted from the second emission unit 12 has lower intensity than illuminating light emitted from a general light fixture and may be bright enough to indicate an evacuation route. As used herein, the "surrounding region R1" may be, if the audio device 1 is installed on a ceiling surface, a region that faces the ceiling surface (such a floor surface). On the other hand, if the audio device 1 is installed on a wall surface, the surrounding region R1 may be a region (such as another wall surface) that faces the former wall surface.

In addition, according to this embodiment, the second emission unit 12 emits, as the illuminating light, at least one of first illuminating light that flickers or second illuminating light with brightness that changes stepwise.

According to this configuration, not just the fire alarm is sounded but also the illuminating light is emitted as well, thus allowing a person to be evacuated in a shorter time. In addition, the second emission unit 12 emits at least one of the first illuminating light or the second illuminating light. This reduces an increase in power consumption compared to, for example, a situation where the illuminating light is emitted continuously at a constant brightness level.

### (2) Details

### (2.1) Overall configuration

Next, an overall configuration for an audio device 1 according to this embodiment will be described in detail. In this embodiment, the audio device 1 may be implemented as, for example, a battery-operated fire alarm. However, this is only an example of the present disclosure and should not be construed as limiting. Alternatively, the audio device 1 may also be implemented as a fire alarm which is electrically connected to an external power supply (such as a commercial power grid) and which is operated by converting AC power (with an effective voltage of 100 V, for example) supplied from the external power supply into a direct current.

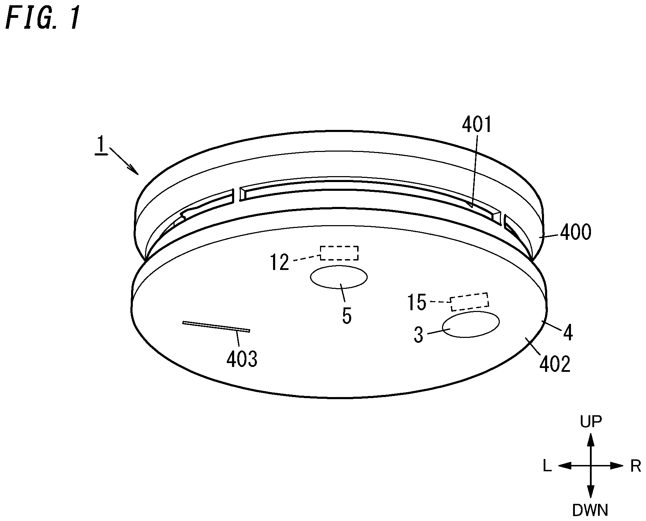

In the example to be described below, the audio device 1 is supposed to be installed on a ceiling surface (which is an exemplary surface of the structural component C1) of a bedroom in a resident's 100 dwelling house as shown in FIG. 4. Thus, the arrangement and operation of respective constituent elements of the audio device 1 in upward, downward, rightward, and leftward directions will be described as being defined by the up, down, right, and left arrows shown in FIG. 1. Note that the arrows indicating these directions are just shown there as an assistant to description and are insubstantial ones. It should also be noted that these directions do not define the direction in which the audio device 1 should be used.

As shown in FIG. 2, the audio device 1 includes not only the control unit 10, the first emission unit (sound emission unit) 11, the second emission unit (illuminating light emitting unit) 12, and the detecting unit 2 but also a battery 13, an operating unit 3, a housing 4, a light-transmitting portion 5 (see FIG. 1), and an indicating lamp 15 as well. In the following description, the audio device 1 is supposed to be implemented as an independently operating fire alarm with no capability of communicating with other fire alarms.

### (2.2) Housing

The housing 4 houses the control unit 10, the first emission unit 11, the second emission unit 12, the battery 13, the detecting unit 2, the indicating lamp 15, and a circuit board (not shown) on which the control unit 10 and other circuit components that form various other circuits are assembled together. Although not shown, as used herein, the various other circuits include an audio circuit, a first lighting circuit, a second lighting circuit, and a power supply circuit as will be described later.

The housing 4 is made of a synthetic resin and may be made of flame-retardant ABS resin, for example. The housing 4 is formed in the shape of a generally compressed cylinder. The housing 4 includes, on the upper surface thereof, a mounting portion, with which the housing 4 is mounted on one surface (installation surface) of the structural component C1.

As shown in FIG. 1, the housing 4 has holes 401, which are provided through a peripheral wall 400 thereof to let smoke flow into a labyrinth inside the housing 4. The housing 4 includes a partition wall that partitions the interior space thereof into upper and lower parts. The labyrinth and the detecting unit 2 are provided in the upper, first space and the control unit 10, the first emission unit 11, the second emission unit 12, the indicating lamp 15, the circuit board, and other components are provided in the lower, second space.

The housing 4 further has a slit window hole 403, which is provided through a lower wall (cover) 402 and elongated in one direction (e.g., rightward/leftward direction in FIG. 1). The window hole 403 is arranged to face the first emission unit 11 housed inside the housing 4. The window hole 403 is provided to let the sound, emitted from the first emission unit 11, come out of the housing 4.

In addition, the housing 4 supports the light-transmitting portion 5 on a lower wall 402 thereof such that the lower surface of the light-transmitting portion 5 is exposed on the outer surface of the housing 4. The light-transmitting portion 5 is a disk member with a light-transmitting property. The light-transmitting portion 5 is made of a material such as an acrylic resin or glass. The light-transmitting portion 5 is arranged to face the second emission unit 12 housed inside the housing 4. The light-transmitting portion 5 lets the light (illuminating light), emitted from the second emission unit 12, come out of the housing 4. Optionally, the light-transmitting portion 5 may include a lens portion, of which the outer surface is formed in a convex shape to direct the light emitted from the second emission unit 12 toward the surrounding region R1. If necessary, a light guide member for efficiently guiding the light emitted from the second emission unit 12 toward the light-transmitting portion 5 may be provided between the light-transmitting portion 5 and the second emission unit 12.

The housing 4 further supports, on the lower wall 402, the operating unit 3 such that the lower surface of the operating unit 3 is exposed on the outer surface of the housing 4. The operating unit 3 accepts an operating command entered externally. The operating unit 3 is configured to be pushed upward by the user with one of his or her fingers, for example. The operating unit 3 is a disk member with a light-transmitting property and is arranged to face the indicating lamp 15 housed inside the housing 4. In addition, the operating unit 3 is configured to press down a push button switch (not shown) housed inside the housing 4 when subjected to a push operation.

In this embodiment, when the lower surface of the lower wall 402 is looked up to from under the housing 4, the window hole 403 and the operating unit 3 are arranged in line in one direction (e.g., in the rightward/leftward direction in FIG. 1) such that the center of the lower surface of the lower wall 402 is interposed between the window hole 403 and the operating unit 3, for example. Furthermore, when the lower surface of the lower wall 402 is looked up to from under the housing 4, the light-transmitting portion 5 is located closer to the front end with respect to the center of the lower surface of the lower wall 402.

### (2.3) First emission unit

The first emission unit 11 emits a sound (i.e., an acoustic wave). When the control unit 10 determines that a fire should be present, the first emission unit 11 emits an alarm sound to alert the user to the presence of the fire.

The first emission unit 11 may be implemented as a loudspeaker that transduces an electrical signal into a sound. The loudspeaker includes a diaphragm and emits an alarm sound by mechanically vibrating the diaphragm in accordance with the electrical signal. The loudspeaker is formed in the shape of a circular disk in a front view. The first emission unit 11 emits an alarm sound (such as a beep) under the control of the control unit 10. To improve the alerting performance in terms of the alarm sound, the first emission unit 11 suitably emits an alarm sound, of which the loudness (i.e., the sound pressure level) is variable. For example, the alarm sound may include a sweep sound that is swept from a low-frequency sound to a high-frequency sound. Optionally, the alarm sound may be accompanied with a voice warning message such as "Fire! Fire!" In this embodiment, the alarm sound is supposed to be made up of the sweep sound and the voice warning message continuous with the sweep sound.

On the circuit board described above, circuit components that form an acoustic circuit, for example, may be assembled together. The acoustic circuit includes a low-pass filter and an amplifier, for example. On receiving a pulse width modulation (PWM) signal corresponding to the alarm sound and generated by the control unit 10 at the outbreak of a fire, the acoustic circuit makes the low-pass filter transform the PWM signal into an audio signal with a sinusoidal waveform, makes the amplifier amplify the audio signal, and then makes the first emission unit 11 output the amplified signal as an alarm sound.

The first emission unit 11 also emits the alarm sound tentatively even when subjected to an operation check test. The first emission unit 11 emits a voice warning message such as "Operating normally" or "Operating abnormally" according to the condition of the audio device 1. The operation check test may be carried out by either operating the operating unit 3 or pulling a pull string (not shown) extended from the housing 4. Optionally, the first emission unit 11 may emit a voice warning message notifying the user that it is about time the battery 13 was replaced. The battery 13 may be a lithium-ion battery, for example.

### (2.4) Second emission unit (illuminating light emitting unit)

The second emission unit 12 emits illuminating light. The second emission unit 12 emits illuminating light that irradiates the surrounding region R1 in accordance with information provided about the fire under the control of the control unit 10. In this embodiment, the second emission unit 12 emits, as the illuminating light, illuminating light with brightness that changes stepwise (as second illuminating light).

The second emission unit 12 includes, as a light source, a single or a plurality of illuminating white light-emitting diodes (LEDs) 12A mounted on the circuit board (see FIG 2). The second emission unit 12 is OFF normally (i.e., while monitoring to see if any fire is present) and is turned ON (i.e., starts emitting the illuminating light) when the control unit 10 determines that a fire should be present.

The LED 12A may be implemented as a package LED in which at least one LED chip is mounted at the center of the mounting surface of a flat plate mounting board. The LED chip is suitably a blue light-emitting diode that radiates a blue ray out of the light-emitting surface thereof. In addition, the mounting surface of the board including the LED chip is coated with an encapsulation resin to which a fluorescent material is added to convert the wavelength of the blue ray emitted from the LED chip. The LED 12A is configured to emit the white illuminating light from the light-emitting surface thereof when DC voltage is applied between the anode electrode and cathode electrode thereof. The color of the illuminating light does not have to be white but may also be any other color. Nevertheless, the color of the illuminating light is suitably different from the color of the light emitted from the indicating lamp 15.

On the circuit board described above, mounted are circuit components of the first lighting circuit for turning ON the LEDs 12A of the second emission unit 12. The first lighting circuit turns the LEDs 12A ON with the DC power discharged from the battery 13 under the control of the control unit 10. If the audio device 1 is electrically connected to a commercial power grid, then the first lighting circuit turns the LEDs 12A ON by converting the AC power supplied from the power grid into a DC current.

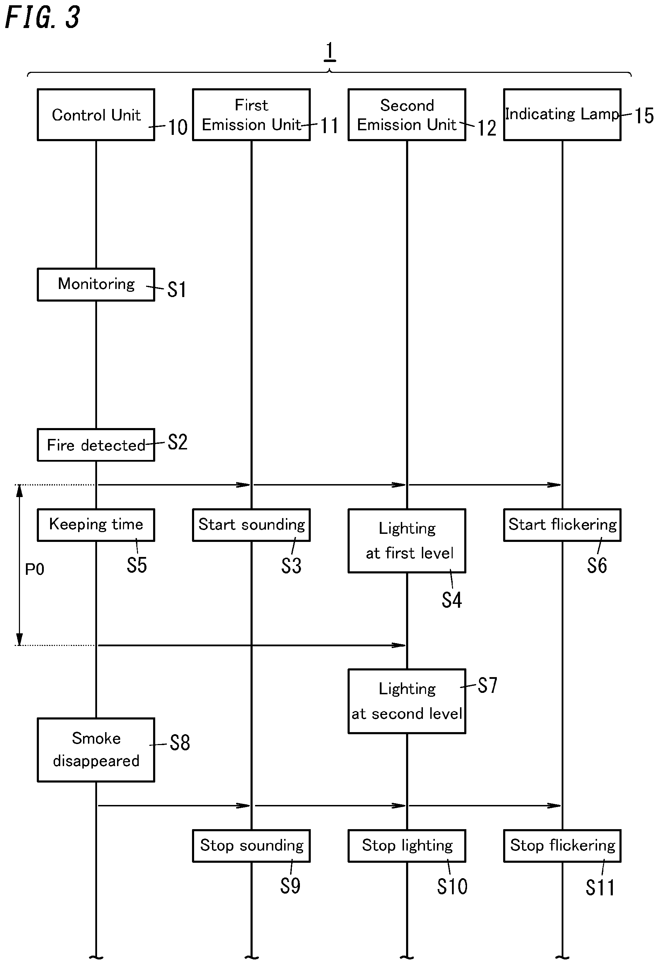

In this case, the second emission unit 12 according to this embodiment emits illuminating light, of which the dimming level (brightness) is set at a first dimming level (first level), until a predetermined period P0 (see FIG 3) passes since the start of emission of the illuminating light (second illuminating light). Once the predetermined period P0 has passed, however, the second emission unit 12 emits illuminating light, of which the dimming level is set at a second dimming level (second level) lower than the first dimming level. The first dimming level may be 100%, for example. The second dimming level may be 50%, for example.

The light (illuminating light) emitted from the second emission unit 12 is transmitted through the light-transmitting portion 5 to come out of the housing 4 and irradiate the surrounding region R1 (e.g., the floor surface and bed in the bedroom in this example). The second emission unit 12 also emits light tentatively even when subjected to an operation check test. Just like the first emission unit 11, the second emission unit 12 may also be subjected to an operation check test by either operating the operating unit 3 or pulling a pull string. The second emission unit 12 suitably emits illuminating light at the first dimming level for a few seconds, for example, and then emits illuminating light at the second dimming level so as to allow a person who performs the test to confirm the stepwise change of the brightness at the time of the operation chest test. Optionally, the audio device 1 may be provided with a control knob, for example, to make the first dimming level and the second dimming level adjustable appropriately.

### (2.5) Indicating lamp

The indicating lamp 15 includes, as its light source, a red LED 15A mounted on the circuit board. The indicating lamp 15 is OFF normally (i.e., while monitoring to see if there is any fire present) but starts flickering (or is turned ON) when the control unit 10 determines that a fire should be present.

On the circuit board described above, mounted are circuit components of the second lighting circuit for flickering the LED 15A of the indicating lamp 15. The second lighting circuit flickers the LED 15A with the DC power discharged from the battery 13 under the control of the control unit 10. If the audio device 1 is electrically connected to a commercial power grid, then the second lighting circuit flickers the LED 15A by converting the AC power supplied from the power grid into a DC current.

The light emitted from the indicating lamp 15 is transmitted through the operating unit 3 with light transmitting property to come out of the housing 4. The resident 100 is allowed to learn, by seeing the operating unit 3 flickering in red, that the audio device 1 is now in operation (i.e., detecting a fire). The indicating lamp 15 also flickers when subjected to an operation check test. The operation check test of the indicating lamp 15 may be carried out by either operating the operating unit 3 or pulling a pull string just like the first emission unit 11. In addition, the indicating lamp 15 also flickers when it is about time the battery 13 was replaced or when the audio device 1 is out of order. If the operating unit 3 is operated while the indicating lamp 15 is flickering, the first emission unit 11 emits a voice warning message that it is about time the battery was replaced or that the audio device 1 has gone out of order.

### (2.6) Detecting unit

The detecting unit 2 detects the outbreak of a fire as a particular event. In this embodiment, the detecting unit 2 may be implemented as, for example, a photoelectric sensor for detecting smoke. As shown in FIG 2, the detecting unit 2 includes a light-emitting unit 21 such as an LED and a photodetector unit 22 such as a photodiode, for example. The light-emitting unit 21 and the photodetector unit 22 are arranged in the labyrinth of the housing 4 such that the photosensitive plane of the photodetector unit 22 is off the optical axis of the light emitted from the light-emitting unit 21. In the event of the outbreak of a fire, smoke may flow into the labyrinth through the holes 401 provided through the peripheral wall 400 of the housing 4.

If there is no smoke in the labyrinth of the housing 4, then the light emitted from the light-emitting unit 21 hardly reaches the photosensitive plane of the photodetector unit 22. On the other hand, if there is any smoke in the labyrinth of the housing 4, then the light emitted from the light-emitting unit 21 is scattered by the smoke, thus causing some of the scattered light to reach the photosensitive plane of the photodetector unit 22. That is to say, the detecting unit 2 makes the photodetector unit 22 receive the light emitted from the light-emitting unit 21 which has been scattered by the smoke.

The detecting unit 2 is electrically connected to the control unit 10. The detecting unit 2 transmits an electrical signal (detection signal), indicating a voltage level corresponding to the quantity of the light received by the photodetector unit 22, to the control unit 10. In response, the control unit 10 determines, by converting the quantity of light represented by the detection signal received from the detecting unit 2 into the concentration of smoke (as an exemplary event level), whether or not any fire is present. Alternatively, the detecting unit 2 may convert the quantity of the light received by the photodetector unit 22 into a smoke concentration and then transmit a detection signal indicating a voltage level corresponding to the smoke concentration to the control unit 10. Still alternatively, the detecting unit 2 may determine, based on the quantity of the light received at the photodetector unit 22, that a fire (smoke) should be present and then transmit a detection signal, including information about the outbreak of the fire, to the control unit 10.

### (2.7) Control unit

The control unit 10 may be implemented as, for example, a microcomputer including, as major constituent elements, a central processing unit (CPU) and a memory. That is to say, the control unit 10 is implemented as a computer including a CPU and a memory. The computer performs the function of the control unit 10 by making the CPU execute a program stored in the memory. In this embodiment, the program is stored in advance in the memory. However, this is only an example and should not be construed as limiting. The program may also be downloaded via a telecommunications line such as the Internet or distributed after having been stored in a non-transitory storage medium such as a memory card.

The control unit 10 controls the first emission unit 11, the acoustic circuit, the second emission unit 12, the indicating lamp 15, the first lighting circuit, the second lighting circuit, the detecting unit 2, and other units. In addition, the control unit 10 also controls a power supply circuit for generating, based on the DC power supplied from the battery 13, operating power for various types of circuits.

The control unit 10 is configured to determine, in accordance with information provided about a fire as a particular event, whether or not any fire is present. Specifically, the control unit 10 monitors the level of the detection signal (information) received from the detecting unit 2 to determine whether or not the event level included in the detection signal has exceeded a threshold value. The event level may be, for example, the converted smoke concentration as described above. Alternatively, the event level may also be the quantity of light.

The control unit 10 stores the threshold value in its own memory. The control unit 10 may determine, at regular time intervals, whether or not the smoke concentration has exceeded the threshold value, and may determine, when finding the smoke concentration greater than the threshold value at least once, that a fire should be present. The regular time interval may be 5 seconds, for example. Alternatively, the control unit 10 may count the number of times the smoke concentration has exceeded the threshold value consecutively, and may determine, on finding the number of times reaching a predetermined number of times, that a fire should be present. Naturally, the control unit 10 may directly determine, on receiving a detection signal including information about the outbreak of a fire from the detecting unit 2, that a fire should be present.

On determining, based on the smoke concentration, that a fire should be present, the control unit 10 makes the first emission unit 11 start emitting an alarm sound. Specifically, the control unit 10 generates a PWM signal corresponding to a sweep sound, of which the frequency changes linearly with the passage of time, and outputs the PWM signal to the acoustic circuit. The PWM signal is converted by the acoustic circuit into an audio signal so that a sweep sound (as an alarm sound) is emitted from the first emission unit 11. In addition, the control unit 10 also generates, based on message data stored in its own memory, a PWM signal corresponding to the voice warning message and outputs the PWM signal to the acoustic circuit. The PWM signal is converted by the acoustic circuit into an audio signal so that a voice warning message (with an alarm sound) is emitted from the first emission unit 11.

In addition, on determining, based on the smoke concentration, that a fire should be present, the control unit 10 makes the second emission unit 12 start emitting illuminating light. Specifically, on determining that a fire should be present, the control unit 10 generates a first dimming level control signal (PWM signal) with a duty cycle corresponding to a first dimming level and outputs the first dimming level control signal to the first lighting circuit. Note that when the duty cycle falls within the range from 0% to 5%, the dimming level (output level) is 100%. When the duty cycle is equal to or greater than 98% (but less than 100%), the dimming level is 5% (which is a lower limit value). Also, when the duty cycle is greater than 5% and less than 98%, the dimming level decreases at a constant ratio as the duty cycle increases.

On receiving the first dimming level control signal from the control unit 10, the first lighting circuit adjusts, in accordance with the first dimming level control signal, an output current to be supplied to the LED 12A such that the second emission unit 12 turns ON at the first dimming level (i.e., performs dimming level control).

The control unit 10 starts keeping, using a timer, the time that has passed since the start of emission of the illuminating light. Then, when the predetermined period P0 passes, the control unit 10 generates a second dimming level control signal (as a PWM signal) with a duty cycle corresponding to the second dimming level and outputs the second dimming level control signal to the first lighting circuit.

On receiving the second dimming level control signal from the control unit 10, the first lighting circuit adjusts, in accordance with the second dimming level control signal, an output current to be supplied to the LED 12A (e.g., decreases the amount of the output current in this case) such that the second emission unit 12 turns ON at the second dimming level.

Furthermore, when determining, based on the smoke concentration, that a fire should be present, the control unit 10 makes the indicating lamp 15 start emitting light. Specifically, the control unit 10 transmits a control signal, instructing that the indicating lamp 15 be flickered, to the second lighting circuit. On receiving the control signal from the control unit 10, the second lighting circuit flickers the indicating lamp 15.

The control unit 10 also continues determining the smoke concentration even while the fire alarm is being sounded (i.e., while an alarm sound is being emitted). When finding the smoke concentration equal to or less than a reference value while the fire alarm is being sounded, the control unit 10 stops generating the PWM signal to instruct the first emission unit 11 to stop emitting the alarm sound. In addition, the control unit 10 also transmits a stop signal to the first lighting circuit and the second lighting circuit to stop emitting light from the second emission unit 12 and the indicating lamp 15. That is to say, on determining that the fire (smoke) should be no longer present, the control unit 10 automatically stops emitting the alarm sound, stops emitting the illuminating light, and stops flickering the indicating lamp 15.

In addition, on detecting that the push button switch is turned ON in the housing 4 through a push operation performed on the operating unit 3 while the fire alarm is being sounded, the control unit 10 stops emitting the alarm sound. If the resident 100 determines that the alarm should be being sounded by the audio device 1 by mistake, then he or she may stop emitting the alarm sound by performing the push operation on the operating unit 3. The resident 100 may also stop emitting the alarm sound by pulling the pull string.

On the other hand, when the push button switch is turned ON in the housing 4 by a push operation performed on the operating unit 3 while the fire alarm is not being sounded, the control unit 10 carries out a predetermined type of test to check the operation. The operation check test includes, for example, a sound emission test on the first emission unit 11, an illuminating light emission test on the second emission unit 12, and a flickering light test on the indicating lamp 15. The operation check test may also be performed by pulling the pull string.

### (2.8) How this audio device works

Next, it will be described how the audio device 1 installed in a bedroom as shown in FIG 4 works following the sequence shown in FIG 3 at the outbreak of a fire. In the example shown in FIG 4, the resident 100 is supposed to be sleeping in bed in the bedroom at midnight when the fire breaks out.

The control unit 10 of the audio device 1 repeatedly determines, at regular intervals of 5 seconds, for example, whether or not the smoke concentration has exceeded a threshold value (in Step S1 (monitoring) shown in FIG 3). On determining that a fire should be present (in Step S2 (fire detected) shown in FIG 3), the control unit 10 outputs a PWM signal to the acoustic circuit. Next, the first emission unit 11 receives an audio signal, to which the PWM signal has been transformed by the acoustic circuit, to starts emitting an alarm sound (in Step S3 (start sounding) shown in FIG 3). As a result, the fire alarm is sounded in the bedroom as shown in FIG 4.

In addition, on determining that a fire should be present, the control unit 10 also outputs a first dimming level control signal to the first lighting circuit. Thus, the second emission unit 12 has its dimming level controlled by the first lighting circuit to turn ON at a first dimming level (of 100%, for example) (in Step S4 (lighting at first level) shown in FIG 3). As a result, the bedroom that has been in almost complete darkness is brightened up with the illuminating light emitted from the second emission unit 12 as shown in FIG 4. In addition, the control unit 10 starts keeping, using a timer, the time that has passed since the start of emission of the illuminating light (in Step S5 (keeping time) shown in FIG 3).

Furthermore, on determining that a fire should be present, the control unit 10 also outputs a control signal to the second lighting circuit. In response to the control signal, the indicating lamp 15 starts flickering (in Step S6 (start flickering) shown in FIG 3).

When a predetermined period P0 passes since the start of emission of the illuminating light at the first dimming level, the control unit 10 outputs a second dimming level control signal to the first lighting circuit. In response to the second dimming level control signal, the second emission unit 12 that has been ON at the first dimming level gradually turns down toward a second dimming level (of 50%, for example) as a target value (in Step S7 (lighting at second level) shown in FIG. 3). This somewhat decreases the brightness in the bedroom.

Thereafter, on determining that the smoke concentration has decreased to a reference value or less (in Step S8 (smoke disappeared) shown in FIG 3), the control unit 10 makes the first emission unit 11 stop emitting the alarm sound (in Step S9 (stop sounding) shown in FIG 3) and also makes the second emission unit 12 stop emitting the illuminating light (in Step S10 (stop lighting) shown in FIG 3). In addition, the control unit 10 also makes the indicating lamp 15 stop flickering (in Step S11 (stop flickering) shown in FIG 3).

In this case, if a fire breaks out in a house at midnight, for example, then the resident 100, sleeping in his or her bedroom of the house, may jump out of the bed in almost complete darkness at the alarm sound. In such a situation, it may be difficult for him or her to instantly sense the route and direction from the bed to the door leading to the hallway. Meanwhile, in such an emergency situation, the resident 100 may attempt to grope around in the darkness to reach for the wall switch to turn the bedroom light ON. Such an attempt to turn the wall switch ON could cause a significant delay in evacuation. In addition, if the resident 100 is a hearing-impaired person, then he or she could be unaware of the outbreak of the fire at the alarm sound only. To overcome these problems, the audio device 1 emits not only the alarm sound but also the illuminating light from the second emission unit 12, thus increasing the chances of the resident 100 instantly sensing the route (evacuation route) from the bed to the door leading to the hallway and saving him or her the time and effort to turn the bedroom light ON. Besides, the illuminating light emitted from the second emission unit 12 increases the chances of even a resident 100 who is a hearing-impaired person sensing the presence of a fire. In short, the audio device 1 contributes to evacuating the resident 100 in a shorter time by emitting not only the alarm sound but also the illuminating light as well.

On top of that, the second emission unit 12 of the audio device 1 emits illuminating light (as second illuminating light) with brightness that changes stepwise while the fire alarm is being sounded. This contributes to reducing an increase in power consumption compared to a situation where the illuminating light is emitted at a constant brightness level, for example.

Furthermore, until the predetermined period P0 passes, the second emission unit 12 continues emitting the illuminating light set at the first dimming level (as the second illuminating light). Once the predetermined period P0 has passed, the second emission unit 12 starts emitting illuminating light set at a second dimming level lower than the first dimming level (as the second illuminating light). This reduces the power consumed by the second emission unit 12 after the predetermined period P0 has passed.

The predetermined period P0 is a period during which the resident 100 should complete the evacuation after the outbreak of the fire. The predetermined period P0 may be 5 minutes, for example. Once the predetermined period P0 has passed, a flashover and other phenomena that could arise in the house should increase the chances of the audio device 1 itself being damaged too much to function properly anymore. In other words, it can be said that the second emission unit 12 may consume the majority of power during this first predetermined period P0. In particular, the audio device 1 according to this embodiment is operated with power supplied from the battery 13, and therefore, has only limited power to consume. Thus, when a part of usable power is allocated to the emission of the illuminating light, most of the power is supposed to be consumed, first and foremost, during the first predetermined period P0. That is why the brightness of the illuminating light is changed before and after the predetermined period P0 passes.

### (3) Variations

Next, some variations will be enumerated one after another. In the following description, the exemplary embodiment described above will be hereinafter referred to as a "basic example." Note that each of the variations to be described below may be adopted in combination with the basic example described above and/or any other one(s) of the variations.

### (3.1) First variation

In the basic example described above, the first dimming level is set at 100% and the second dimming level is set at 50%, for example. That is to say, according to the basic example, after the control unit 10 has determined that a fire should be present (after the fire has been detected), the second emission unit 12 emits illuminating light, of which the brightness decreases stepwise with the passage of time. However, this is only an example of the present disclosure and should not be construed as limiting. Alternatively, the second emission unit 12 may also emit illuminating light, of which the brightness increases stepwise with the passage of time.

For example, if intense illuminating light emitted from the second emission unit 12 suddenly strikes the eye of the resident 100 who has been sleeping but has just woken up at the alarm sound at midnight, then he or she may find the illuminating light glaring and uncomfortable. To avoid such a situation, the second emission unit 12 may emit illuminating light with somewhat lower brightness for a few seconds since the start of lighting.

### (3.2) Second variation

In the basic example described above, the second emission unit 12 emits illuminating light with brightness that changes stepwise (i.e., the second illuminating light) as the illuminating light. However, this is only an example of the present disclosure and should not be construed as limiting. Alternatively, the second emission unit 12 may emit flickering illuminating light (i.e., the first illuminating light) as the illuminating light. This configuration also contributes to reducing an increase in power consumption while allowing the resident 100 to be evacuated in an even shorter time, compared to, for example, a situation where the second emission unit 12 just emits the illuminating light as continuous lighting after the control unit 10 has determined that a fire should be present.

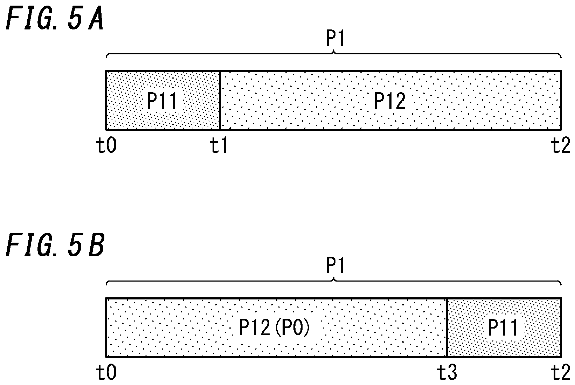

In the following description, the period from a point t0 in time when the decision is made by the control unit 10 that a fire should be present to a point in time t2 through which the second emission unit 12 continues emitting the illuminating light will be hereinafter referred to as an "emission period PI" (see FIGS. 5A and 5B). The emission period P1 may correspond to the predetermined period P0 according to the basic example or may be a period longer than the predetermined period P0 according to the basic example. For example, the emission period P1 may be a period with a limited time length for which the second emission unit 12 may be turned ON at a dimming level of 100% with the power supplied from the battery 13.

Optionally, the emission period P1 may include a flickering period P11 in which flickering illuminating light (i.e., first illuminating light) is emitted and a continuous lighting period P12 in which illuminating light is emitted continuously as shown in each of FIGS. 5A and 5B. Note that the continuous lighting period P12 is not an essential period. Alternatively, the entire emission period P1 may be the flickering period P11.

Providing the flickering period P11 contributes to reducing an increase in power consumption compared to, for example, a situation where the emission period P1 includes no flickering periods P11. In addition, providing the flickering period P11 facilitates attracting the resident's 100 attention, thus further improving the alerting performance.

The flickering period P11 may begin, for example, at the beginning time t0 of the emission period P1 as shown in FIG 5A. The flickering period P11 (i.e., the period from the time t0 through the time t1 shown in FIG 5A) may have a duration of a few seconds to several ten seconds, for example. Then, at the time t1, a transition is made from the flickering period P11 to the continuous lighting period P12. Letting the flickering period P11 begin in this manner as soon as a decision is made that a fire should be present increases the chances of the sleeping resident 100 waking up with the flickering illuminating light.

Alternatively, the flickering period P11 may begin when the continuous lighting period P12 is over (at a time t3) as shown in FIG 5B. In that case, the continuous lighting period P12 may correspond to the predetermined period P0 according to the basic example. That is to say, after the control unit 10 has determined that a fire should be present, the second emission unit 12 may emit the illuminating light continuously at a dimming level of 100% for five minutes, and may start emitting flickering light when five minutes has passed, for example.

Optionally, during the continuous lighting period P12, the brightness may also change stepwise as in the basic example. For example, the second emission unit 12 may emit flickering light for one minute since the fire has been detected, emit illuminating light continuously at a dimming level of 100% for four minutes after that, and then may emit illuminating light continuously at a dimming level of 50% when five minutes has passed since the detection of the fire. Optionally, two or more flickering periods P11 may be set. For example, in the emission period P1, the flickering period P11, the continuous lighting period P12, and another flickering period P11 may be set in this order.

Still alternatively, the flickering illuminating light emission period does not have to end when a prescribed amount of time passes but may end when the illuminating light flickers a predetermined number of times, for example. For instance, when the illuminating light flickers three times since the beginning time t0, the second emission unit 12 may finish emitting the flickering illuminating light and start emitting illuminating light continuously. Yet alternatively, the flickering cycle time may change with the passage of time within the flickering period P11.

### (3.3) Third variation

In the basic example, the second emission unit 12 emits illuminating light, of which the brightness changes stepwise with the passage of time (as the second illuminating light). However, the brightness of the illuminating light (second illuminating light) does not have to change with time.

Alternatively, the brightness of the second illuminating light may also vary stepwise according to the event level included in the information about a particular event, for example. If the particular event is a fire as in the basic example described above, then the brightness of the second illuminating light may also vary with the smoke concentration or light quantity detected by the detecting unit 2. For example, the brightness of the second illuminating light may increase, or decrease, as the smoke concentration increases. If the particular event is gas leakage, then the brightness of the second illuminating light may vary according to the gas concentration detected.

In that case, the control unit 10 suitably stores, in advance, data about correspondence between a plurality of event levels and a plurality of dimming levels in its own memory. In that case, the control unit 10 may determine a dimming level corresponding to the actually detected event level by reference to the data stored in the memory and generate a dimming level control signal with a duty cycle corresponding to the dimming level. In accordance with the dimming level control signal, the first lighting circuit may make the second emission unit 12 emit the illuminating light.

Furthermore, in the basic example described above, the brightness of the second illuminating light is changed between only two levels, namely, from the first dimming level to the second dimming level, and vice versa. However, this is only an example of the present disclosure and should not be construed as limiting. Alternatively, the brightness of the second illuminating light may also be changed between three or more levels. Still alternatively, the brightness of the second illuminating light may also increase or decrease gradually according to the event level detected.

Varying the brightness of the second illuminating light according to the event level in this manner allows the resident 100 to recognize, based on the brightness of the illuminating light, the event level of the particular event that is present before him or her. In addition, this also facilitates attracting the resident's attention.

Yet alternatively, the brightness of the second illuminating light may also vary according to the loudness (i.e., the sound pressure level) of the alarm sound emitted from the first emission unit 11. This allows the alarm sound to be associated with the illuminating light. The alarm sound emitted from the first emission unit 11 may be a sweep sound, for example. As the loudness of the alarm sound increases, the brightness of the second illuminating light may increase, or may decrease to the contrary.

In that case, the control unit 10 suitably changes the duty cycle of the dimming level control signal to be output to the first lighting circuit as the frequency of the PWM signal to be output to the acoustic circuit increases, for example. According to this configuration, letting the brightness of the second illuminating light decrease as the loudness of the alarm sound increases, for example, causes an increase in the power consumption involved with the emission of the alarm sound but causes a decrease in the power consumption involved with the emission of the second illuminating light.

### (3.4) Fourth variation

The audio device 1 according to the basic example is a fire alarm that operates independently. That is to say, the audio device 1 according to the basic example does not have the capability of communicating with other fire alarms. However, this is only an example of the present disclosure and should not be construed as limiting. Alternatively, the audio device 1 may also be an interconnected fire alarm with the capability of communicating with other fire alarms. In that case, the communication may be established either wirelessly or via cables, whichever is appropriate.

Optionally, the audio device 1 may also be configured to communicate various types of devices other than fire alarms. Examples of those devices other than fire alarms include cellphones (such as smartphones) carried by the resident 100 with him or her and security monitoring devices installed in the house.

### (3.5) Fifth variation

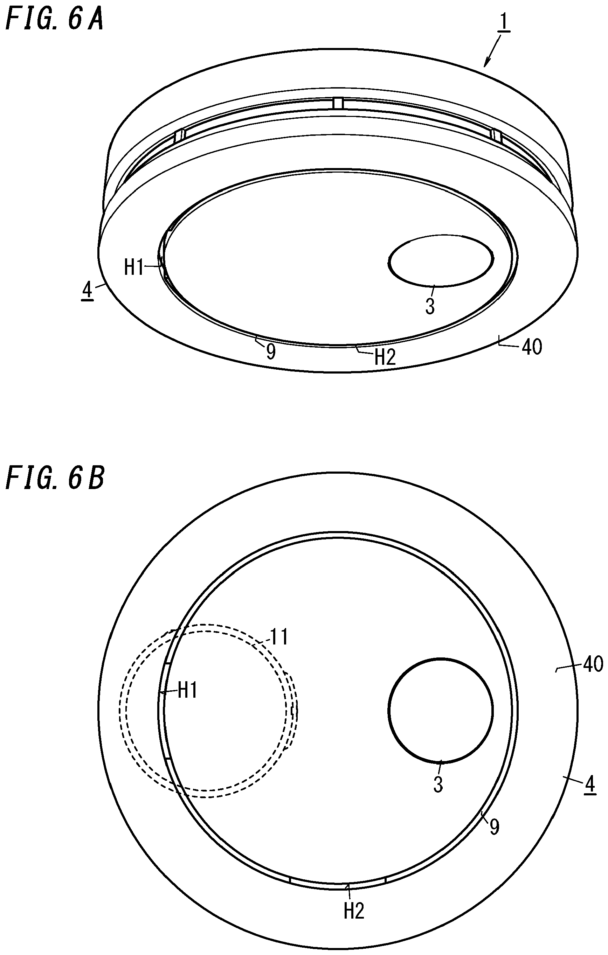

Optionally, the audio device 1 may have the structure shown in FIGS. 6A and 6B (according to a fifth variation). The audio device 1 according to this variation includes an annular slit 9, which is recessed upward and provided through one surface 40 (e.g., the lower surface in FIG 6A) of the housing 4. The slit 9 is provided to extend along the circular outer periphery of the housing 4 when the housing 4 is looked up to from under the housing 4. The center of the annular slit 9 substantially agrees with the center of the circular outer periphery of the housing 4. The slit 9 has, on its inner space (e.g., its inner bottom surface), a sound hole H1 that allows the alarm sound to come out of the housing 4 and a window hole H2 that allows the illuminating light to come out of the housing 4. The first emission unit 11 (such as a loudspeaker) is housed in the housing 4 to face the sound hole H1. The second emission unit 12 is housed in the housing 4 to face the window hole H2.

According to this variation, the sound hole H1 and the window hole H2 are provided through an inner surface of the slit 9, thus making these holes less conspicuous. This allows the resident to be evacuated in an even shorter time while reducing the chances of affecting the appearance of the audio device 1.

### (3.6) Other variations

The functions of the audio device 1 (mainly the control unit 10 thereof) according to the basic example may also be implemented as a control method, a computer program, or a non-transitory storage medium that stores the program. In this case, the audio device 1 or the agent that carries out the control method includes a computer system. The computer system includes, as principal hardware components, a processor and a memory. The functions of the audio device 1 or the agent that carries out the control method may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a largescale integrated circuit (LSI). Those electronic circuits may be either integrated together on a single chip or distributed on multiple chips, whichever is appropriate. Those multiple chips may be integrated together in a single device or distributed in multiple devices without limitation.

In particular, according to the basic example described above, the control unit 10 not only determines whether or not a fire is present but also generates the PWM signal to be output to the acoustic circuit and a dimming signal to be output to the first lighting circuit, for example. However, this is only an example of the present disclosure and should not be construed as limiting. Alternatively, these functions may also be separately performed by two or more processors. Furthermore, the first lighting circuit and the second lighting circuit may also be implemented as a single lighting circuit.

Also, the audio device 1 according to the basic example is implemented as a single device. However, this is only an example of the present disclosure and should not be construed as limiting. Alternatively, at least one of the respective functions to be performed by the control unit 10, the first emission unit 11, the second emission unit 12, the detecting unit 2, the operating unit 3, the indicating lamp 15, the first lighting circuit, the second lighting circuit, the acoustic circuit, the power supply circuit, and other units and circuits of the audio device 1 may also be distributed in two or more devices. Optionally, at least some of the functions of the audio device 1 may also be performed by a cloud computing system.

### (4) Advantages

As can be seen from the foregoing description, an audio device (1) according to a first aspect is to be installed in a structural component (C1). The audio device (1) includes a control unit (10), a first emission unit (11), and a second emission unit (12). The control unit (10) determines, in accordance with information provided about a particular event, whether or not the particular event is present. The first emission unit (11) emits, when the control unit (10) determines that the particular event be present, a sound to alert a person to the presence of the particular event. The second emission unit (12) emits, in accordance with the information, illuminating light that irradiates a surrounding region (R1). The second emission unit (12) emits, as the illuminating light, at least one of first illuminating light that flickers or second illuminating light with brightness that changes stepwise. The first aspect contributes to reducing an increase in power consumption while allowing a person to be evacuated in an even shorter time.

In an audio device (1) according to a second aspect, which may be implemented in conjunction with the first aspect, the second emission unit (12) suitably starts, when the control unit (10) determines that the particular event be present, emitting the second illuminating light. The second emission unit (12) suitably emits, until a predetermined period (P0) passes since a start of emission of the second illuminating light, the second illuminating light, of which the brightness is set at a first level. Once the predetermined period (P0) has passed, the second emission unit (12) suitably emits the second illuminating light, of which the brightness is set at a second level lower than the first level. The second aspect contributes to reducing an increase in power consumption compared to, for example, a situation where the brightness of the illuminating light remains constant at the first level even after the predetermined period (P0) has passed.

In an audio device (1) according to a third aspect, which may be implemented in conjunction with the first or second aspect, an emission period (P1) in which the second emission unit (12) emits the illuminating light suitably includes: a flickering period (P11) in which the second emission unit (12) emits the first illuminating light; and a continuous lighting period (P12) in which the second emission unit (12) emits the illuminating light as continuous lighting. The third aspect contributes to reducing an increase in power consumption compared to, for example, a situation where the emission period (P1) includes no flickering periods (P11). In addition, providing the flickering period (P11) facilitates attracting the users' (e.g., residents') attention, thus further improving the alerting performance.

In an audio device (1) according to a fourth aspect, which may be implemented in conjunction with any one of the first to third aspects, the brightness of the second illuminating light suitably varies according to an event level included in the information. The fourth aspect allows the user to recognize, based on the brightness of the illuminating light, the event level of the particular event that is present before him or her. In addition, this also facilitates drawing his or her attention.

In an audio device (1) according to a fifth aspect, which may be implemented in conjunction with any one of the first to fourth aspects, the first emission unit (11) suitably emits the sound with variable loudness. The fifth aspect further improves the alerting performance in terms of the alarm sound.

In an audio device (1) according to a sixth aspect, which may be implemented in conjunction with the fifth aspect, the brightness of the second illuminating light suitably varies according to the loudness of the sound. The sixth aspect allows the sound and the illuminating light to be associated with each other.

In an audio device (1) according to a seventh aspect, which may be implemented in conjunction with any one of the first to sixth aspects, the particular event may be a fire. The audio device (1) suitably further includes a detecting unit (2) to detect the outbreak of the fire. The control unit (10) suitably determines whether or not the fire is present by being provided, as the information, with a result of detection by the detecting unit (2). The seventh aspect provides an audio device (1) with a detecting unit (2) which contributes to reducing an increase in power consumption while allowing a person to be evacuated in an even shorter time at the outbreak of a fire.

A control method according to an eighth aspect is a method for controlling an audio device (1) installed in a structural component (C1). The control method includes a decision step, a first emission step, and a second emission step. The decision step includes determining, in accordance with information provided about a particular event, whether or not the particular event is present. The first emission step includes making, when a decision is made that the particular event be present, a first emission unit (11) emit a sound to alert a person to the presence of the particular event. The second emission step includes making a second emission unit (12) emit, in accordance with the information, illuminating light that irradiates a surrounding region (R1). The second emission step includes making the second emission unit emit, as the illuminating light, at least one of first illuminating light that flickers or second illuminating light with brightness that changes stepwise. The eighth aspect provides a control method that contributes to reducing an increase in power consumption while allowing a person to be evacuated in an even shorter time.

A program according to a ninth aspect is designed to cause a computer system to carry out the control method according to the eighth aspect. The ninth aspect provides the capability of contributing to reducing an increase in power consumption while allowing a person to be evacuated in an even shorter time. Optionally, a non-transitory computer-readable medium may store the program. In that case, when the program is executed by a computer system, the computer system may carry out the control method according to the eighth aspect.

Note that constituent elements according to the second to seventh aspects are not essential constituent elements for the audio device (1) but may be omitted as appropriate.

### Reference Signs List

- 1: Audio Device
- 10: Control Unit
- 11: First Emission Unit
- 12: Second Emission Unit
- 2: Detecting Unit
- C1: Structural Component
- R1: Surrounding Region
- P0: Predetermined Period
- P1: Emission Period
- P11: Flickering Period
- P12: Continuous Lighting Period

## Claims

1. An audio device to be installed in a structural component, the audio device comprising:
a control unit configured to determine, in accordance with information provided about a particular event, whether or not the particular event is present;
a first emission unit configured to emit, when the control unit determines that the particular event be present, a sound to alert a person to the presence of the particular event; and
a second emission unit configured to emit, in accordance with the information, illuminating light that irradiates a surrounding region,
the second emission unit being configured to emit, as the illuminating light, at least one of first illuminating light that flickers or second illuminating light with brightness that changes stepwise.

2. The audio device of claim 1, wherein
the second emission unit is configured to, when the control unit determines that the particular event be present, start emitting the second illuminating light, and
the second emission unit is configured to,
until a predetermined period passes since a start of emission of the second illuminating light, emit the second illuminating light, of which the brightness is set at a first level, and
once the predetermined period has passed, emit the second illuminating light, of which the brightness is set at a second level lower than the first level.

3. The audio device of claim 1 or 2, wherein
an emission period in which the second emission unit emits the illuminating light includes:
a flickering period in which the second emission unit emits the first illuminating light;
and
a continuous lighting period in which the second emission unit emits the illuminating light as continuous lighting.

4. The audio device of any one of claims 1 to 3, wherein
the brightness of the second illuminating light varies according to an event level included in the information.

5. The audio device of any one of claims 1 to 4, wherein
the first emission unit is configured to emit the sound with variable loudness.

6. The audio device of claim 5, wherein
the brightness of the second illuminating light varies according to the loudness of the sound.

7. The audio device of any one of claims 1 to 6, wherein
the particular event is a fire,
the audio device further includes a detecting unit configured to detect outbreak of the fire, and
the control unit is configured to determine whether or not the fire is present by being provided, as the information, with a result of detection by the detecting unit.

8. A method for controlling an audio device installed in a structural component, the method comprising:
a decision step including determining, in accordance with information provided about a particular event, whether or not the particular event is present;
a first emission step including making, when a decision is made that the particular event be present, a first emission unit emit a sound to alert a person to the presence of the particular event; and
a second emission step including making a second emission unit emit, in accordance with the information, illuminating light that irradiates a surrounding region,
the second emission step including making the second emission unit emit, as the illuminating light, at least one of first illuminating light that flickers or second illuminating light with brightness that changes stepwise.

9. A program designed to cause a computer system to carry out the method of claim 8.
